# FASCICULE DE BREVET EUROPEEN

(11) **EP 1 575 694 B1**
(45) Date de publication et mention de la délivrance du brevet: **10.03.2010**
(21) Numéro de dépôt: 03814503.3
(22) Date de dépôt: 26.12.2003
(51) Int. Cl.: B01D 53/88

(54) **DISPOSITIF DE TRAITEMENT DE GAZ PAR CATALYSE, NOTAMMENT POUR UNE HOTTE DE FILTRATION DE FUMEES DE CUISSON**
VORRICHTUNG ZUR KATALYTISCHEN GASBEHANDLUNG, INSBESONDERE FÜR EINE FILTERHAUBE FÜR KOCHDÜNSTE
CATALYTIC GAS TREATMENT DEVICE WHICH IS INTENDED, IN PARTICULAR, FOR A FILTER HOOD FOR COOKING FUMES

(30) Priorité: 27.12.2002 FR 0216778
(43) Date de publication de la demande: 21.09.2005
(73) Titulaire: FAGORBRANDT SAS, 92500 Rueil Malmaison (FR)
(72) Inventeur: CHEVRIER, Jean-Paul, F-45590 St Cyr en Val (FR); TATIBOUET, Jean-Michel, F-86000 Poitiers (FR); BARRAULT, Joel, F-86240 Liguge (FR); AYRAULT , Cécile, F-86470 Lavausseau (FR); PASQUIERS, Stéphane, F-78140 Velizy (FR); ROUSSEAU, Antoine, F-75002 Paris (FR); FRESNET, François, F-92000 Nanterre (FR)
(74) Mandataire: Santarelli
(86) Numéro de dépôt international: PCT/FR2003/003919
(87) Numéro de publication internationale: WO 2004/060540

(56) Documents cités:
- EP-A- 1 086 740
- EP-A- 1 258 281
- WO-A-02/49743

## Description

La présente invention concerne un dispositif de traitement de gaz par catalyse.

Elle concerne également une hotte de filtration des fumées de cuisson ainsi qu'un système de traitement par catalyse de gaz mettant en oeuvre un tel dispositif.

L'invention s'inscrit de manière générale dans le domaine du traitement des gaz, notamment en vue de leur recyclage, dans des hottes filtrantes de fumées de cuisson, ou encore dans des systèmes de climatisation.

En particulier, lors de la cuisson des aliments, les fumées et gaz de cuisson contiennent de nombreuses particules en suspension, grasses et/ou odorantes, qu'il est nécessaire de pouvoir traiter efficacement, notamment lorsque la hotte de filtration est du type à recyclage et que les gaz et fumées de cuisson sont rejetés après traitement dans l'air ambiant.

On connaît des dispositifs de traitement par catalyse des gaz dans lesquels une réaction catalytique est générée pour dégrader les composés organiques volatils qui constituent principalement les fumées de cuisson.

En pratique, un support comprenant des canaux pour le passage du flux gazeux à traiter, comporte des particules actives de traitement qui permettent d'obtenir la catalyse des molécules odorantes présentes dans les fumées de cuisson.

On connaît également des dispositifs dans lesquels le phénomène de catalyse est activé grâce à la génération d'un plasma de décharge dans le support catalytique.

L'utilisation d'un plasma de décharge permet notamment d'abaisser la température à laquelle les réactions catalytiques sont efficaces pour détruire les composés organiques volatils.

Un tel dispositif de traitement de gaz est décrit notamment dans le document FR 2 818 558.

Afin de laisser libre le passage du flux gazeux, les électrodes sont disposées parallèlement aux canaux de passage dans le support catalytique.

Cependant, un tel dispositif présente des contraintes de dimensionnement pour la génération du plasma, de telle sorte qu'il est peu adapté à son intégration à l'intérieur d'un conduit de circulation des gaz, équipant les hottes de cuisson ou encore les climatiseurs.

On connaît également un dispositif de traitement de gaz décrit dans le document EP 1 086 740 dans lequel des électrodes sont disposées perpendiculairement aux canaux de passage dans le support catalytique.

Cependant, la progression du flux gazeux entre ces électrodes et le support catalytique est difficile.

La présente invention a pour but de résoudre les inconvénients précités et de proposer un dispositif de traitement par catalyse des gaz de structure relativement simplifiée, permettant une progression efficace du flux gazeux à traiter.

A cet effet, la présente invention vise un dispositif de traitement par catalyse de gaz comportant un support monolithique, comprenant des canaux de passage d'un flux gazeux, et des particules actives de traitement disposées sur le support monolithique, et des électrodes de génération d'un plasma de décharge disposées de part et d'autre du support monolithique, chaque électrode étant disposée dans un plan transversal aux canaux de passage d'un flux gazeux, des passages du flux gazeux étant ménagés perpendiculairement au plan de l'électrode.

Conformément à l'invention, un espace est ménagé entre le plan de l'électrode et le support monolithique.

Un écoulement correct du flux gazeux peut ainsi être obtenu au travers des canaux de passage du support monolithique, en sortie des passages ménagés dans le plan de l'électrode. En effet, cet espace favorise le passage du flux gazeux, notamment lorsque les passages perpendiculaires au plan de l'électrode ne coïncident pas avec les canaux de passage du support monolithique.

En outre, grâce à la disposition des électrodes, l'ensemble électrodes-support peut avoir dans le plan des électrodes, c'est-à-dire dans le plan transversal aux canaux de passage du flux gazeux, des dimensions quelconques.

On peut ainsi dimensionner le dispositif de telle sorte qu'il s'adapte parfaitement à une section interne d'un conduit, qui peut être circulaire, ovoïde ou même rectangulaire.

Selon une caractéristique préférée de l'invention, des moyens formant entretoise sont disposés entre le support et les électrodes. Ces moyens formant entretoises permettent d'espacer le support de l'électrode.

Selon une autre caractéristique préférée de l'invention, ces moyens formant entretoise sont constitués d'un joint d'étanchéité permettant d'éviter qu'une partie du flux gazeux ne contourne le support monolithique.

Selon un mode de réalisation particulièrement pratique de l'invention, chaque électrode est formée d'une plaque comprenant des orifices de passage du flux gazeux répartis dans la plaque.

En perçant des orifices dans la plaque formant électrode, on réalise des passages pour le flux gazeux traversant le dispositif.

Dans une forme de réalisation particulièrement pratique de l'invention, chaque électrode est constituée d'un support plan comprenant sur au moins une des faces un circuit imprimé, revêtu d'un matériau diélectrique.

Selon un autre aspect de l'invention, une hotte de filtration des fumées de cuisson comprend un dispositif de traitement conforme à l'invention.

Une hotte de filtration classique peut ainsi être équipée, directement à l'intérieur de son conduit de circulation des gaz, par un dispositif de traitement de section transversale adaptée à la dimension du conduit de circulation.

Selon un autre aspect de l'invention, un système de traitement par catalyse des gaz comprend au moins deux dispositifs de traitement juxtaposés conformes à l'invention, les dispositifs de traitement ayant une électrode commune de génération d'un plasma de décharge.

On peut ainsi associer plusieurs dispositifs de traitement tout en limitant le nombre d'électrodes nécessaires à la génération d'un plasma de décharge dans chacun des supports de catalyse.

D'autres particularités et avantages de l'invention apparaîtront encore dans la description ci-après.

Aux dessins annexés, donnés à titre d'exemples non limitatifs :
- la figure 1 est une vue schématique en perspective illustrant le principe d'un dispositif de traitement conforme à l'invention ;
- la figure 2 est une vue en plan d'une électrode adaptée à être mise en oeuvre dans un dispositif de traitement conforme à l'invention ;
- la figure 3 est une vue en coupe transversale selon la ligne III.III de la figure 2 ; et
- la figure 4 est une vue en coupe longitudinale illustrant un système de traitement dans un conduit de circulation de gaz conforme à un mode de réalisation de l'invention.

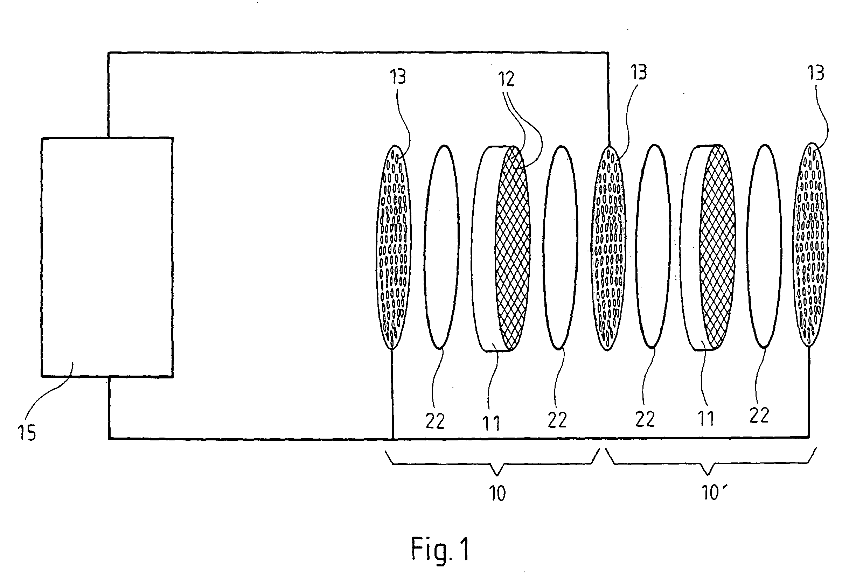

On va décrire tout d'abord, en référence à la figure 1, un dispositif de traitement par couplage plasma-catalyse.

La figure 1 illustre un système de traitement par catalyse des gaz comprenant deux dispositifs de traitement juxtaposés 10, 10'.

Nous allons décrire ci-dessous un de ces dispositifs de traitement 10, étant entendu que le second dispositif de traitement 10' illustré à la figure 1 est en tout point identique au premier dispositif de traitement 10.

Ce dispositif de traitement 10 comporte de manière générale un catalyseur associé à des moyens de génération d'un plasma de décharge disposés de part et d'autre du catalyseur.

Plus particulièrement, le catalyseur est formé d'un bloc 11 d'une seule pièce, dans lequel sont ménagés des canaux 12 permettant le passage des fumées de cuisson.

Ce bloc ou support monolithique 11 est ici par exemple réalisé en céramique telle que de la cordiérite Mg₂ Al₄ Si₅ O₁₈.

Ce type de matériau est classiquement utilisé dans la technologie des pots catalytiques pour véhicules automobiles.

Bien entendu, n'importe quel autre matériau traversé par des canaux ou des ouvertures autorisant le passage des gaz et capable de supporter une phase active pour la catalyse peut convenir pour réaliser un tel support monolithique 11.

Des particules actives de traitement sont déposées sur le support de manière à former différents sites de catalyse.

Ces particules actives de traitement peuvent être constituées de métaux nobles sous forme de particules métalliques très divisées ou d'oxydes métalliques.

A titre d'exemple, ces particules actives de traitement peuvent être formées d'un métal noble tels que du platine (Pt), du palladium (Pd), du rhodium (Rh), de l'or (Au), de l'argent (Ag) ou du ruthénium (Ru).

Ces particules actives peuvent également être formées d'un oxyde de métal non noble tel que le fer (Fe), le cuivre (Cu), le cobalt (Co), le nickel (Ni), le manganèse (Mn) ou le chrome (Cr).

Bien entendu, les particules actives peuvent contenir l'un de ces métaux ou une combinaison de deux ou plusieurs de ces métaux.

Ces métaux sont déposés sur le support 11 sous forme de petites particules très dispersées à la surface de ce support 11.

De préférence, afin d'augmenter la surface d'échange pour les réactions catalytiques et favoriser la dispersion des particules actives, le support 11 est revêtu d'un revêtement d'oxyde minéraux formant un "washcoat".

Ce revêtement peut être formé d'oxydes minéraux à base d'aluminium (Al), de cérium (Ce), de lanthane (La), de zirconium (Zr), de manganèse (Mn) ou de titane (Ti).

Ici aussi le revêtement peut être formé d'un de ces oxydes pris isolément ou d'une combinaison de deux ou plusieurs de ces oxydes minéraux.

La petite taille des particules métalliques permet d'obtenir une surface métallique active très importante. A titre d'exemple, un monolithe contenant un catalyseur métallique (Pt, 1% en poids) finement divisé déposé sur un washcoat (particules d'environ 10 nm) représente une surface exposée du platine de l'ordre de 0.2 m²/g de monolithe, soit pour un élément de 100 g, 20 m² de surface métallique.

Le support lui-même 11 pourrait être réalisé dans une phase catalytique active, et par exemple être réalisé directement dans un oxyde métallique tel que l'oxyde de titane TiO₂ par exemple.

Outre ce support monolithique 11, le dispositif de traitement comporte des électrodes 13, 14 disposées de part et d'autre du support monolithique 11.

Ces électrodes 13, 14 sont reliées à un générateur 15 destiné à appliquer une impulsion de tension aux électrodes 13, 14 ou une autre forme de signal, telle que par exemple une forme de sinus.

Ces électrodes sont recouvertes d'un matériau diélectrique formant une barrière diélectrique.

La nature du plasma ainsi formé est de type "*décharge à barrière diélectrique".* Ce type de plasma possède plusieurs avantages, notamment d'être bien réparti en de nombreux filaments au sein du mélange de gaz à traiter. La décharge à barrière diélectrique tolère en outre des impulsions de tension de longue durée, sans formation d'un arc électrique, permettant l'utilisation d'un générateur électrique relativement simplifié.

Dans son principe, le dispositif de traitement présente un catalyseur ou un support de la phase active du catalyseur de grande surface spécifique afin de pouvoir adsorber les molécules de polluants.

En effet, la catalyse hétérogène gaz-solide étant un processus de surface, plus celle-ci est grande en regard de la masse de catalyseur utilisé, meilleur est l'efficacité de celui-ci. Cette adsorption, hormis le rôle de permettre à la réaction catalytique d'avoir lieu, permet aussi de concentrer le polluant (par rapport à sa concentration dans la phase gazeuse) à la surface du catalyseur au voisinage des centres actifs et donc de favoriser d'autant son élimination.

Une grande surface spécifique, associée avec une adsorption forte du polluant crée donc un réservoir important de polluant stocké dans le réacteur catalytique, ce qui revient à augmenter considérablement le temps de séjour moyen d'une molécule dans le réacteur.

Elle aura par conséquent une probabilité d'autant plus élevée d'être attaquée par les électrons énergétiques ou par les espèces radicalaires oxydantes créées par le plasma dans la phase gazeuse ou sur le catalyseur.

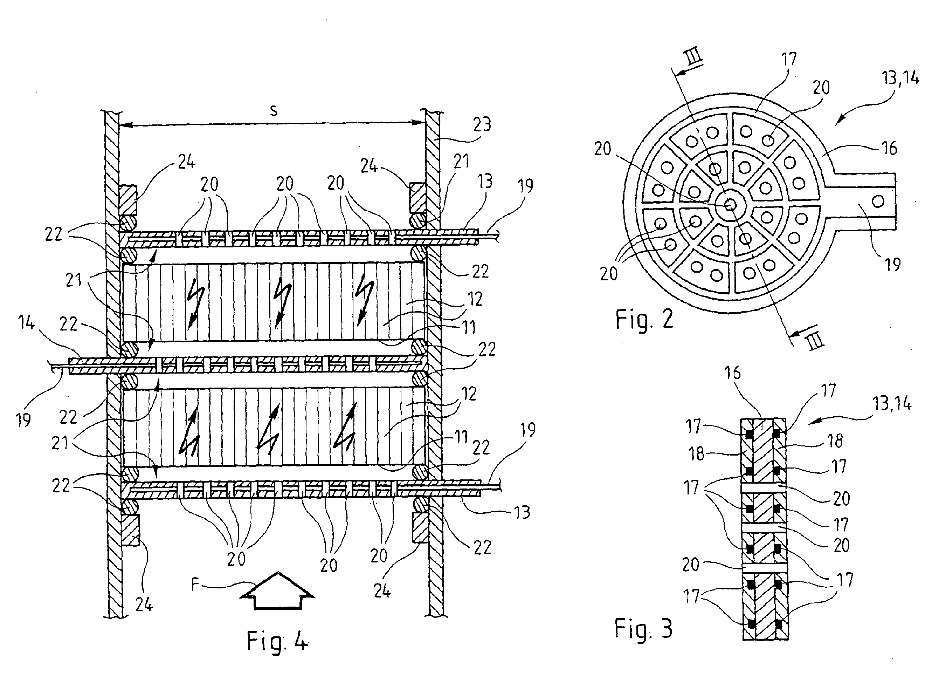

Comme bien illustré aux figures 2 et 3, chaque électrode est ici constituée d'un support plan 16 comprenant, sur chacune de ses faces, un circuit imprimé 17. Un matériau diélectrique 18 est disposé sur l'ensemble, de chaque côté du support plan 16, afin de former une couche uniforme d'un matériau diélectrique au-dessus des pistes conductrices 17 constituant le circuit imprimé.

A titre d'exemple, le support plan 16 peut être constitué d'une résine, la couche diélectrique 18 étant réalisée dans une résine époxy isolante.

Dans cet exemple, l'électrode 13, 14 est plane, de section circulaire, et est prolongée par une patte de connexion 19 permettant sa connexion électrique au générateur électrique 15.

L'épaisseur de l'électrode telle qu'illustrée aux figures 2 et 3 est de l'ordre de 2mm.

Bien entendu, de multiples formes d'électrodes 13, 14 peuvent ainsi être réalisées à partir d'un circuit imprimé sur un support de telle sorte que cette électrode en forme de plaque peut ainsi être adaptée à s'étendre sur l'intégralité de la section transversale du support monolithique 12, quelles que soient les dimensions de celui-ci.

Comme bien illustré à la figure 4, des passages pour le flux gazeux sont ménagés perpendiculairement au plan de l'électrode.

Ici, lorsque l'électrode est formée d'une plaque, cette dernière comprend des orifices de passage 20 du flux gazeux.

Ces orifices de passage 20 sont répartis dans la plaque. Ainsi, l'électrode 13, 14 qui est placée transversalement au canaux de passage 12 du support monolithique 11, autorise également le passage du flux gazeux à travers les orifices 20.

A titre d'exemple, l'électrode illustrée à la figure 2 peut avoir un diamètre extérieur de l'ordre de 150 à 250mm, les orifices 20 ayant une forme circulaire de diamètre compris entre 10 et 12mm.

Afin d'assurer un écoulement correct du flux gazeux au travers du support monolithique 11, et d'éviter notamment des passages préférentiels des gaz à l'aplomb des orifices 20 des électrodes 13, 14, un espace 21 est prévu entre le support 11 et les électrodes 13, 14.

Ainsi, ce support 11 et les électrodes 13, 14 sont disposés à distance l'un de l'autre afin d'assurer une répartition homogène du flux gazeux dans le support monolithique 11.

Cet espacement 21 est réalisé ici grâce à des moyens formant entretoise 22. Ils sont dans cet exemple constitués d'un joint d'étanchéité 22, disposé à la périphérie de la plaque formant électrode 13, 14.

Cette entretoise 22 possède ainsi une fonction d'étanchéité afin d'éviter qu'une partie du flux gazeux ne contourne le support monolithique 11.

On peut ainsi réaliser sur ce principe un couplage support monolithique 11 et électrodes 13, 14 de dimension quelconque dans le plan des électrodes 13, 14.

Ici, le mode de réalisation est circulaire, mais bien entendu, d'autres formes pourraient être réalisées à partir de section ovoïde ou même rectangulaire.

L'épaisseur du support monolithique 11 disposée entre les électrodes 13, 14 est comprise typiquement entre 6 et 7mm, permettant de générer un plasma de décharge à l'intérieur du support. En pratique, cette épaisseur du support 11 peut être comprise entre 4 et 10mm.

La valeur de la distance séparant le support 11 de l'électrode 13, 14 définie par le joint 22 est comprise entre 1 et 2mm.

La valeur de la différence de potentiel appliquée entre les électrodes 13, 14 par le générateur 15 pour générer un plasma est essentiellement déterminée par la valeur de l'épaisseur choisie pour le support 11. Cette tension est par exemple de l'ordre de 34kV pour un support 11 de 6mm d'épaisseur.

Le fonctionnement du dispositif n'est pas limité par la surface de ses électrodes 13, 14, pour autant que le générateur de tension puisse débiter un courant électrique suffisant pour l'épaisseur du support et la surface choisie.

Comme bien illustré à la figure 1, lorsque plusieurs dispositifs de traitement 10, 10' sont juxtaposés dans un même système de traitement, afin d'améliorer le traitement des gaz circulants à l'intérieur de ce système, les dispositifs de traitement 10, 10' peuvent avoir une électrode commune 14 de génération d'un plasma de décharge.

On va maintenant décrire, en référence à la figure 4, un dispositif de traitement monté à l'intérieur d'un conduit de circulation des gaz 23 tel qu'il peut être utilisé dans une hotte de filtration des fumées de cuisson, et par exemple une hotte de cuisson domestique, ou encore dans un système de climatisation ou d'aération, requérant le traitement des gaz avant leur rejet dans l'air ambiant.

Comme bien illustré à la figure 4, grâce à la disposition des électrodes 13, 14 dans le plan transversal de circulation des gaz à l'intérieur du support 11, les dimensions de ce dispositif dans le plan des électrodes peuvent être quelconques de telles sortes qu'elles peuvent être sensiblement égales à une section transversale s du conduit de circulation 23 recevant le dispositif de traitement.

Ainsi, comme bien illustré à la figure 4, les dispositifs de traitement sont disposés transversalement à la direction de circulation du flux gazeux illustré par la flèche F.

Les électrodes 13, 14 s'adaptent parfaitement aux dimensions du conduit de circulation 23, ce dernier comportant des ouvertures permettant la sortie des pattes de connexion 19 de chacune des électrodes au générateur 15 (non illustré sur la figure 4).

Grâce aux orifices 20 réalisées dans l'épaisseur de la plaque formant électrodes 13, 14, les gaz circulant à l'intérieur du conduit 23 peuvent traverser l'électrode pour atteindre le support monolithique 12 disposé entre ces électrodes 13, 14.

Comme décrit précédemment, les entretoises 22 sont disposées entre chaque électrode 13, 14 et le support 12 de manière à permettre une meilleure répartition du flux gazeux en sortie des orifices 20 de l'électrode et une propagation uniforme des gaz à l'intérieur des canaux 12 de passage du flux gazeux dans le support 11.

Comme expliqué précédemment, ces entretoises 22 sont formées d'un joint d'étanchéité à la périphérie de l'électrode 13, 14 et du support 12 afin d'éviter le contournement du support 11 par les gaz.

En outre, en disposant une telle entretoise de part et d'autre de chaque électrode 13, 14, on réalise également une étanchéité au niveau de la patte de connexion 19 des électrodes au générateur, afin d'éviter toute fuite de gaz au travers du conduit de circulation 23 des gaz.

L'entretoise 22 permet en outre de garantir l'étanchéité du système en cas de dilatation thermique des électrodes 13, 14 à l'intérieur du conduit de circulation 23.

Afin d'assurer le montage de ce dispositif à l'intérieur du conduit de circulation 23, des bagues de maintien 24 sont réalisées sur la surface intérieure de ce conduit, formant ainsi des butées pour le maintien en place des dispositifs de traitement 10, 10'.

Bien entendu, le système réalisé à partir du dispositif de traitement conforme à l'invention est très modulable.

Bien que l'on ait représenté ici deux dispositifs de traitement juxtaposés 10, 10', un seul dispositif de traitement pourrait être utilisé.

A contrario, plusieurs dispositifs de traitement pourraient être juxtaposés les uns après les autres dans la direction de circulation F du flux gazeux.

En outre, on pourrait dans un même système de traitement alterner la disposition de dispositifs de traitement conformes à l'invention et de dispositifs fonctionnant uniquement en catalyse, sans génération de plasma.

On alterne ainsi les zones de traitement avec plasma et les zones de traitement sans plasma.

En particulier, la dernière zone de traitement dans le conduit de circulation, suivant la direction F de circulation des gaz, pourrait avantageusement être une zone de catalyse sans plasma, permettant uniquement la catalyse des gaz à température ambiante afin de garantir la destruction de l'ozone sur des sites de catalyse constitués par exemple d'oxyde de manganèse MnO₂.

On peut ainsi par un dispositif de forme appropriée traiter l'intégralité des gaz de cuisson circulant dans un conduit 23.

On pourrait également dans un même système de traitement alterner la disposition de dispositifs de traitement conformes à l'invention et de dispositifs fonctionnant uniquement avec plasma, sans la présence de catalyseur. Ces derniers présenteraient l'intérêt de pouvoir détruire sous l'effet plasma les molécules odorantes et générer des espèces chimiques plus faciles à traiter ensuite par catalyse dans un dispositif conforme à l'invention.

Bien entendu, de nombreuses modifications pourraient être apportées à l'exemple de réalisation décrit ci-dessus sans sortir du cadre de l'invention.

Ainsi, l'électrode pourrait ne comporter un circuit imprimé que sur l'une de ses faces.

En outre, tout autre type d'électrodes pourrait être utilisé dans le dispositif conforme à l'invention.

## Revendications

1. Dispositif de traitement de gaz par catalyse comportant :
- un support monolithique (11), comprenant des canaux de passage (12) d'un flux gazeux, et des particules actives de traitement disposées sur le support monolithique (11) ; et
- des électrodes (13, 14) de génération d'un plasma de décharge disposées de part et d'autre du support monolithique (11), chaque électrode (13, 14) étant disposée dans un plan transversal auxdits canaux de passage (12) d'un flux gazeux, des passages (20) du flux gazeux étant ménagés perpendiculairement au plan de l'électrode (13, 14),
**caractérisé en ce qu'**un espace (21) est ménagé entre ledit plan de l'électrode (13, 14) et le support monolithique (11).

2. Dispositif de traitement conforme à la revendication 1, **caractérisé en ce que** des moyens formant entretoise (22) sont disposés entre ledit support monolithique (11) et les électrodes (13, 14).

3. Dispositif de traitement conforme à la revendication 2, **caractérisé en ce que** les moyens formant entretoise (22) sont constitués d'un joint d'étanchéité.

4. Dispositif de traitement conforme à l'une des revendications 1 à 3, **caractérisé en ce que** chaque électrode (13, 14) est formée d'une plaque comprenant des orifices (20) de passage du flux gazeux répartis dans lesdites plaques.

5. Dispositif de traitement conforme à la revendication 4, **caractérisé en ce que** ladite plaque formant électrode (13, 14) s'étend sur l'intégralité de la section transversale du support monolithique (11).

6. Dispositif de traitement conforme à l'une des revendications 4 ou 5, **caractérisé en ce que** des moyens formant entretoise (22) sont disposés à la périphérie de ladite plaque formant électrode (13, 14), entre ledit support monolithique (11) et les électrodes (13, 14).

7. Dispositif de traitement conforme à l'une des revendications 1 à 6, **caractérisé en ce que** chaque électrode (13, 14) est constituée d'un support plan (16) comprenant sur au moins une des faces un circuit imprimé (17), revêtu d'un matériau diélectrique (18).

8. Dispositif de traitement conforme à l'une des revendications 1 à 7, **caractérisé en ce qu'**il est adapté à être disposé dans un conduit de circulation (23) des gaz, la section transversale du support monolithique (11) étant sensiblement égale à la section transversale du conduit de circulation (23).

9. Hotte de filtration des fumées de cuisson, **caractérisée en ce qu'**elle comprend un dispositif de traitement (10, 10') conforme à l'une des revendications 1 à 8.

10. Système de climatisation, **caractérisé en ce qu'**il comprend un dispositif de traitement (10, 10') conforme à l'une des revendications 1 à 8.

11. Système de traitement par catalyse des gaz, **caractérisé en ce qu'**il comprend au moins deux dispositifs de traitement juxtaposés (10, 10') conformes à l'une des revendications 1 à 8, les dispositifs de traitement (10, 10') ayant une électrode commune (14) de génération d'un plasma de décharge.

12. Système de traitement par catalyse des gaz, **caractérisé en ce qu'**il comprend au moins un dispositif de traitement (10, 10') conforme à l'une des revendications 1 à 8, juxtaposé à un dispositif de traitement fonctionnant uniquement en catalyse.

## Claims

1. Device for treating gases by catalysis, comprising:
- a monolithic support (11), comprising channels (12) for the passage of a gaseous flow, and active treatment particles disposed on the monolithic support (11); and
- electrodes (13, 14) for generating a discharge plasma disposed on each side of the monolithic support (11), each electrode (13, 14) being disposed in a plane transverse to the said channels (12) for the passage of a gaseous flow, passages (20) for the gaseous flow being provided perpendicular to the plane of the electrode (13, 14),
**characterised in that** a space (21) is provided between the said plane of the electrode (13, 14) and the monolithic support (11).

2. Treatment device according to claim 1, **characterised in that** means forming a spacer (22) are disposed between the said monolithic support (11) and the electrodes (13, 14).

3. Treatment device according to claim 2, **characterised in that** the means forming a spacer (22) consist of a gasket.

4. Treatment device according to one of claims 1 to 3, **characterised in that** each electrode (13, 14) is formed by a plate comprising orifices (20) for passage of the gaseous flow distributed in the said plates.

5. Treatment device according to claim 4, **characterised in that** the said plate forming an electrode (13, 14) extends over the entire transverse section of the monolithic support (11).

6. Treatment device according to one of claims 4 or 5, **characterised in that** means forming a spacer (22) are disposed at the periphery of the said plate forming an electrode (13, 14), between the said monolithic support (11) and the electrodes (13, 14).

7. Treatment device according to one of claims 1 to 6, **characterised in that** each electrode (13, 14) consists of a flat support (16) comprising, on at least one of the faces, a printed circuit (17) covered with a dielectric material (18).

8. Treatment device according to one of claims 1 to 7, **characterised in that** it is adapted to be disposed in a conduit (23) for circulation of the gases, the transverse section of the monolithic support (11) being substantially equal to the transverse section of the circulation conduit (23).

9. Cooking fume filtration hood, **characterised in that** it comprises a treatment device (10, 10') according to one of claims 1 to 8.

10. Air conditioning system, **characterised in that** it comprises a treatment device (10, 10') according to one of claims 1 to 8.

11. Gas catalysis treatment system, **characterised in that** it comprises at least two juxtaposed treatment devices (10, 10') according to one of claims 1 to 8, the treatment devices (10, 10') having a common electrode (14) for generating a discharge plasma.

12. Gas catalysis treatment system, **characterised in that** it comprises at least one treatment device (10, 10') according to one of claims 1 to 8, juxtaposed with a treatment device functioning solely in catalysis.

## Patentansprüche

1. Vorrichtung zur Behandlung von Gas durch Katalyse, mit:
- einem monolithischen Träger (11), der Kanäle (12) für den Durchlass eines gasförmigen Stroms und aktive Behandlungspartikel aufweist, die auf dem monolithischen Träger (11) angeordnet sind; und
- Elektroden (13, 14) zur Erzeugung eines Entladungsplasmas, die auf der einen und auf der anderen Seite des monolithischen Trägers (11) angeordnet sind, wobei jede Elektrode (13, 14) in einer Ebene angeordnet ist, die quer zu den Kanälen (12) für den Durchlass eines gasförmigen Stroms verläuft, wobei senkrecht zur Ebene der Elektrode (13, 14) Durchgänge (20) für den gasförmigen Strom ausgebildet sind,
**dadurch gekennzeichnet, dass** zwischen der Ebene der Elektrode (13, 14) und dem monolithischen Träger (11) ein Raum (21) ausgebildet ist.

2. Behandlungsvorrichtung nach Anspruch 1, **dadurch gekennzeichnet, dass** zwischen dem monolithischen Träger (11) und den Elektroden (13, 14) Mittel angeordnet sind, die ein Zwischenelement (22) bilden.

3. Behandlungsvorrichtung nach Anspruch 2, **dadurch gekennzeichnet, dass** die Mittel, die ein Zwischenelement (22) bilden, aus einer Dichtung bestehen.

4. Behandlungsvorrichtung nach einem der Ansprüche 1 bis 3, **dadurch gekennzeichnet, dass** jede Elektrode (13, 14) aus einer Platte mit Öffnungen (20) für den Durchlass des gasförmigen Stroms gebildet ist, die in den Platten verteilt sind.

5. Behandlungsvorrichtung nach Anspruch 4, **dadurch gekennzeichnet, dass** sich die Platte, die eine Elektrode (13, 14) bildet, über den gesamten Querschnitt des monolithischen Trägers (11) erstreckt.

6. Behandlungsvorrichtung nach einem der Ansprüche 4 oder 5, **dadurch gekennzeichnet, dass** Mittel, die ein Zwischenelement (22) bilden, am Umfang der Platte, die eine Elektrode (13, 14) bildet, zwischen dem monolithischen Träger (11) und den Elektroden (13, 14) angeordnet sind.

7. Behandlungsvorrichtung nach einem der Ansprüche 1 bis 6, **dadurch gekennzeichnet, dass** jede Elektrode (13, 14) aus einem ebenen Träger (16) besteht, der auf mindestens einer der Flächen eine mit einem dielektrischen Material (18) überzogene gedruckte Schaltung (17) aufweist.

8. Behandlungsvorrichtung nach einem der Ansprüche 1 bis 7, **dadurch gekennzeichnet, dass** sie dazu geeignet ist, in einer Gasumlaufleitung (23) angeordnet zu sein, wobei der Querschnitt des monolithischen Trägers (11) im Wesentlichen dem Querschnitt der Umlaufleitung (23) entspricht.

9. Haube zum Filtern der Kochdünste, **dadurch gekennzeichnet, dass** sie eine Behandlungsvorrichtung (10, 10') nach einem der Ansprüche 1 bis 8 aufweist.

10. Klimasystem, **dadurch gekennzeichnet, dass** es eine Behandlungsvorrichtung (10, 10') nach einem der Ansprüche 1 bis 8 aufweist.

11. System zur Gasbehandlung durch Katalyse, **dadurch gekennzeichnet, dass** es mindestens zwei nebeneinander liegende Behandlungsvorrichtungen (10, 10') nach einem der Ansprüche 1 bis 8 aufweist, wobei die Behandlungsvorrichtungen (10, 10') eine gemeinsame Elektrode (14) zur Erzeugung eines Entladungsplasmas aufweisen.

12. System zur Gasbehandlung durch Katalyse, **dadurch gekennzeichnet, dass** es mindestens eine Behandlungsvorrichtung (10, 10') nach einem der Ansprüche 1 bis 8 aufweist, die neben einer Behandlungsvorrichtung angeordnet ist, die lediglich im Katalysemodus betrieben wird.
